(19) Europäisches Patentamt

European Patent Office

Office européen des brevets

(11) **EP 2 730 945 A1**

(12) **EUROPEAN PATENT APPLICATION**

(43) Date of publication:
**14.05.2014 Bulletin 2014/20**

(51) Int Cl.:
*G01S 13/93* [(2006.01)]     *G08G 1/16* [(2006.01)]

(21) Application number: **12192083.9**

(22) Date of filing: **09.11.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Nederlandse Organisatie voor Toegepast -Natuurwetenschappelijk Onderzoek TNO 2628 VK Delft (NL)**

(72) Inventors:
• **Van Nunen, Ellen**
  **2628 VK Delft (NL)**
• **Kester, Leonardus Johannes Hubertus Maria**
  **2628 VK Delft (NL)**
• **Ploeg, Jeroen**
  **2628 VK Delft (NL)**

(74) Representative: **Jansen, Cornelis Marinus V.O. Johan de Wittlaan 7 2517 JR Den Haag (NL)**

(54) **Vehicle spacing control**

(57)     A method of determining a safe distance ($d_{safe}$) between a first vehicle (1) and a second vehicle (2) moving ahead of the first vehicle, each vehicle having a state which comprises at least one of a position ($s_1$, $s_2$), a speed and an acceleration of the respective vehicle, the method comprising the steps of:
- collecting sensor data relating to the state of the vehicles (1, 2),
- determining, using the sensor data and a time-dependent description of the state of the second vehicle (2), a state of the second vehicle (2) as a result of a maximum deceleration of said second vehicle,

- determining, using a time-dependent model of the behaviour of the first vehicle (1) and said state of the second vehicle (2), a state of the first vehicle (1) as a result of said maximum deceleration of said second vehicle (2), and
- determining, using said state of the second vehicle (2) and said state of the first vehicle (1), the safe distance ($d_{safe}$).

Error margins of said sensor data are used to determine the safe distance, thus increasing the safety margin of the method.

FIG. 1

EP 2 730 945 A1

**Description**

The present invention relates to vehicle control systems. More in particular, the present invention relates to a method of determining a safe spacing policy for vehicles, said spacing policy preferably including a safe distance, at least a first vehicle being provided with a speed control unit for controlling the speed of the vehicle and at least one sensor unit coupled with the speed control unit for providing sensor data, such as speed, acceleration, location and/or distance data. The present invention further relates to a speed control unit for controlling the speed of a vehicle which is further provided with at least one sensor unit coupled with the speed control unit for providing sensor data. The present invention may be applied in all types of vehicles, such as ships, trains (including subways), airplanes, and road vehicles such as cars and trucks. Although the present invention is particularly useful in cooperative adaptive cruise control (CACC) systems for road vehicles, it is not so limited and may also be used in other cruise control systems or safety systems, such as non-adaptive cruise control and vehicle control systems.

Systems for assisting drivers of vehicles are well known. Reference is made to the article by A. Lindgren and F. Chen: "State of the art analysis: An overview of advanced driver assistance systems (ADAS) and possible human factors issues", in Human Factors and Economic Aspects on Safety, p. 38, 2006. Some systems alert the driver to potentially dangerous situations, such as (unintended) lane changes or braking vehicles ahead. More advanced systems directly control the vehicle, at least in emergency situations, for example by applying the brakes. CACC systems control the distance to the preceding vehicle. If the current speed of the vehicle cannot be maintained, for example because the vehicle ahead slows down, the speed is reduced so as to maintain a proper spacing. Conversely, the speed of the vehicle may later be increased if circumstances allow this.

All these systems rely on the input of data gathered by sensors, such as speed sensors, acceleration sensors and/or position sensors (e.g. using GPS - Global Positioning System). All these sensors necessarily introduce measurement errors, however small. In addition, there are delays in the transmission of the sensor signals and in the processing of these signals by the system. Any measurement errors and delays result in data errors: the speed data and/or other data used in distance calculations are not completely accurate or up-to-date. As a result, any spacing which is determined using these data will be inaccurate.

A crude solution to this problem is to introduce an error margin in the safe distance: by always adding e.g. 20% to the calculated safe distance, any measurement errors will be compensated. However, this means that the safe distance is always larger than necessary, resulting in an inefficient road use and an increased fuel consumption.

It is an object of the present invention to overcome these and other problems of the Prior Art and to provide a method and device for use in vehicle control systems which has an improved reliability and offers improved safety. Accordingly, the present invention provides a method of determining a safe distance between a first vehicle and a second vehicle moving ahead of the first vehicle, each vehicle having a state which comprises at least one of a position, a speed and an acceleration, the method comprising the steps of:

- collecting sensor data relating to the states of the vehicles,
- determining, using the sensor data and a time-dependent description of the state of the second vehicle, a state of the second vehicle which results from a maximum deceleration of said second vehicle,
- determining, using a time-dependent model of the behaviour of the first vehicle and said state of the second vehicle, a state of the first vehicle which results from said maximum deceleration of said second vehicle, and
- determining, using said state of the second vehicle and said state of the first vehicle, the safe distance,

wherein error margins of said sensor data are used to determine the safe distance.

The state of each vehicle comprises the position, the speed and/or the acceleration of the vehicle (it is noted that an acceleration may be positive, zero or negative, and that a negative acceleration may also be called deceleration). A first or normal state is present during normal operation of the vehicle, while a second or emergency state occurs during an emergency break of the second vehicle, during which the second vehicle has a maximum deceleration until standstill.

Thus, using the sensor data and a time-dependent state description of the second vehicle, an emergency state of the second vehicle is determined. Then, using a time-dependent model of the behaviour of the first vehicle and the emergency state of the second vehicle, an emergency state of the first vehicle is determined. Finally, using the emergency state of the second vehicle and the emergency state of the first vehicle, the safe distance is determined.

According to the present invention, error margins of the sensor data are taken into account, resulting in improved safety margins. By involving error margins (that is, uncertainties) in the sensor data when determining the safe distance, any errors which may be introduced by the sensor units collecting the data can be considered and a much improved estimate of a safe distance is obtained. The method of the present invention can be said to determine the uncertainty in the safe distance, based upon the uncertainty in the sensor data.

The error margins, which indicate the maximum error in particular data, may in principle be set to an arbitrary value, but preferably the error margins are chosen to be equal to at least two times the standard deviation of the respective data, preferably three times. In particular margins of three times the standard deviation of the particular data prove to be advantageous as they provide a very high degree of safety: the probability of the data falling outside the range determined by three times the standard deviation are very low. However, these error margins may be set to a suitable value, that is, a value providing an acceptable probability of error.

The time-dependent description of the state of the second vehicle preferably comprises a time-dependent function describing the state of the second vehicle as a function of time, the state preferably having an initial position, an initial speed, an initial acceleration (which may be equal to zero), a time constant and/or a maximum acceleration.

In a preferred embodiment, the model comprises a convolution product of a transfer function of the first vehicle and the state of the second vehicle. That is, the behaviour of the first vehicle, in response to the maximum deceleration of the (second) vehicle ahead, is modeled as a time-dependent transfer function. As is well known in the art of vehicle control, a convolution product of a transfer function and a time-dependent function yields a new time-dependent function. The transfer function may be derived from a vehicle behaviour model in the Laplace domain or any other suitable transform domain.

Although only distance data together with a respective standard deviation may be used, it is preferred that the data used comprise speed data, acceleration data and distance data having a speed data standard deviation, an acceleration data standard deviation and a distance data standard deviation respectively.

In a particularly advantageous embodiment the safe distance is used to determine a safe headway (also called headway time), which safe headway time is used to adjust a desired headway time if the desired headway time is smaller than the safe headway time. A headway time, which may be defined as the distance from the tip of one vehicle to the tip of the next one behind it, expressed as the time it will take for the trailing vehicle to cover that distance, is used in spacing policies to calculate safe and/or desired distances between vehicles. The headway time may be determined so as to provide so-called string stability, that is, to avoid oscillations in the vehicle speed.

In advantageous embodiments the safe distance is determined repeatedly, in real time. That is, the safe distance may be determined every second but preferably every fraction of a second, for example every 10 milliseconds (ms). This offers the advantage that the safe distance is almost instantaneously available if circumstances, such as the speed of a vehicle, change.

Although the present invention may advantageously be used in cooperative adaptive cruise control (CACC) systems, it is not so limited and may be used in other vehicle control systems, including cruise control systems and safety systems.

The present invention also provides a speed control unit for controlling the speed of a first vehicle in dependence of a second vehicle moving ahead of the first vehicle, each vehicle having a state which comprises at least one of a position, a speed and an acceleration,

the speed control unit being arranged for receiving sensor data relating to the states of the vehicles from a sensor unit mounted in the first vehicle,

the speed control unit comprising a memory and a processor for storing and processing said sensor data and a model of the vehicle's behaviour, the speed control unit being arranged for:

- collecting sensor data relating to the states of the vehicles,
- determining, using the sensor data and a time-dependent description of the state of the second vehicle, a state of the second vehicle which results from a maximum deceleration of said second vehicle,
- determining, using a time-dependent model of the behaviour of the first vehicle and said state of the second vehicle, a state of the first vehicle which results from said maximum deceleration of said second vehicle, and
- determining, using said state of the second vehicle and said state of the first vehicle, the safe distance,

wherein error margins of said sensor data are used to determine the safe distance.

Again, by involving the error margins and hence the uncertainties of the sensor data in the determination of the safe distance, the safe distance is adjusted in accordance with these error margins and a more reliable safe distance is obtained.

The present invention additionally provides a computer program product for carrying out the method defined above. A computer program product may comprise a set of computer executable instructions stored on a tangible data carrier, such as a CD, a DVD or a USB memory stick. The set of computer executable instructions, which allow a programmable computer to carry out the method as defined above, may also be available for downloading from a remote server, for example via the Internet.

The present invention will further be explained below with reference to exemplary embodiments illustrated in the accompanying drawings, in which:

Fig. 1 schematically shows, by way of example, road vehicles driving in the same direction.
Fig. 2 schematically shows a vehicle control system according to the present invention.

Fig. 3 schematically shows error margins in the measurements of the sensors which are used in the vehicle control system of Fig. 1.

Fig. 4 schematically shows how a model is used to derive the state of the first vehicle from the state of the second vehicle, in accordance with the present invention.

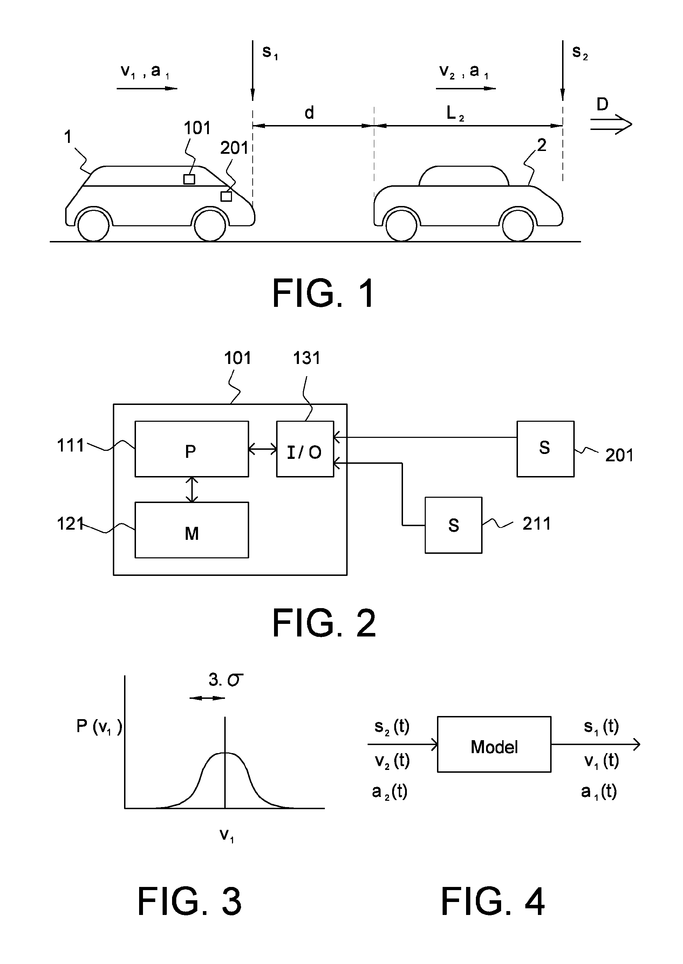

The cars schematically shown in Fig. 1 drive in the same direction D. The first vehicle (car) 1, provided with a speed control unit 101 and a sensor unit 201, is driving behind the second vehicle (car) 2, which may or may not be provided with a speed control unit. A distance d is measured between the front end of the first car 1 and the rear end of the second car 2, while the second car 2 has a length $L_2$. Each car has an instantaneous position $s_1$ and $s_2$ (measured, for example, at the front end of each vehicle), speed (e.g. $v_1$ and $v_2$), and acceleration (e.g. $a_1$ and $a_2$) respectively. Together, the position, speed and acceleration (and possibly other factors) together constitute the state of a vehicle. Each vehicle may brake; the minimum distance required to come to a standstill is the respective braking distance, which may differ between the vehicles.

It will be understood that more cars may be driving in the same direction, or even in opposite directions, but for the sake of clarity the invention will be explained with reference to the two-car example of Fig. 1. It will also be understood that instead of cars driving on a road, trains or other rail vehicles driving on a track and even air-borne transportation devices will benefit from the present invention.

The sensor unit 201 mounted in the first vehicle 1 is configured for collecting data relating to the states of both the first vehicle 1 and the second vehicle 2 and sending those sensor data to the speed control unit 101. More in particular, the data collected by the sensor unit 201 may include speed data produced by a speedometer (e.g. linked to the vehicle's transmission), acceleration data produced by acceleration sensors, distance data produced by a radar unit, and location data produced by a GPS (Global Positioning System) unit. A radar unit may also provide data relating to the relative velocity of the vehicles. The various data producing units are not necessarily accommodated in the housing of the sensor unit 201.

All data sources are prone to errors. These errors include measurement errors, which are caused by a lack of accuracy. Other errors may be introduced by the transmission of data from one unit to another, for example by Wi-Fi, that is, by a wireless local area network (WLAN). When using Wi-Fi, data are transmitted in data packets which are sometimes lost, resulting in both a data loss and a delay in the arrival of fresh data. This transmission delay can be crucial in cases of emergency, for example when the vehicles are breaking hard. The present invention aims to take data loss and/or data errors into account.

The vehicle control system 10 shown merely by way of non-limiting example in Fig. 2 comprises a speed control unit 101, a first sensor (S) unit 201 and a second sensor (S) unit 211. The speed control unit 101 comprises a processor (P) unit 111, a memory (M) unit 121 and an input/output (I/O) unit 131. As the speed control unit 101 may be configured for other tasks in addition to speed control, it may also be referred to as vehicle control unit.

The sensor units 201 and 211 are coupled to the I/O unit 131 of the speed control unit 101. The first sensor unit 201 may comprise a distance sensor, for example a distance sensor using radar. A radar-based distance sensor may also be able to determine a relative velocity: the velocity of the first vehicle 1 relative to the second vehicle 2. The second sensor unit 211 may comprise a speed sensor, for example a speed sensor coupled to a wheel of the vehicle. Additionally, or alternatively, the speed sensor may be based on GPS (Global Positioning System), providing the location of the vehicle as a function of time, and hence providing the speed. Further sensors and/or sensor units may be provided, for example acceleration sensors, location sensors based upon mobile (that is, cellular) telephone networks, and other sensors.

The processor unit 111 is, in combination with the memory unit 121, configured for using a time-dependent description of the position $s_2$ of the second vehicle 2 (see Fig. 1). More in particular, this description describes the position of the second vehicle in a worst-case situation: an emergency brake. Expressed mathematically, such a description may be given by:

$$s_2 = s_{t0} + v_{t0}.t + \tfrac{1}{2}.a_{t0}.t^2 - \tau(a_{max} - a_{t0}) + (\tfrac{1}{2}.t^2 - \tau^2.\exp(-t/\tau)).(a_{max}-a_{t0}) \quad (I)$$

where:

$s_{t0}$ = the location of the second vehicle at to,
$v_{t0}$ = the speed of the second vehicle at to,
$a_{t0}$ = the acceleration of the second vehicle at to,
to = the reference point in time (t = 0),

$\tau$ = the time constant of the second vehicle,

$a_{max}$ = the maximum acceleration/deceleration of the second vehicle.

This description provides the position $s_2$ of the second vehicle 2 as a function of time and is determined by the above-mentioned parameters, some of which (such as $s_{t0}$, $v_{t0}$ and $a_{t0}$) are provided by sensor data and will necessarily include errors.

In accordance with the present invention, the error margins of the sensor data are taken into account. That is, in equation (I) the following substitution are made:

$s_{t0} \rightarrow d_0 - e_d$, where $e_d$ is the distance error margin;
$v_{t0} \rightarrow v_{t0} - e_v$, where $e_v$ is the velocity error margin; and
$a_{t0} \rightarrow a_{t0} - e_a$, where $e_a$ is the acceleration error margin.

It is noted that the initial position $s_{t0}$ of the second vehicle is now substituted with the initial distance $(d_0 - e_d)$ between the two vehicles, the initial position of the first vehicle being chosen to be equal to zero for the sake of convenience.

By using a parameter, such as an initial speed, from which the error margin is subtracted, the probability of measurement errors resulting in a value of the safe distance which it too small, and which may therefore result in a collision, is significantly reduced.

Instead of, or in addition to the above way of involving uncertainties in the calculations of the safe distance, joint probability density functions may be used.

Of course the probability of errors is further reduced as the error margins are increased. However, choosing error margins which are too large will result in unnecessarily large distances between the vehicles, and hence in inefficient road use and possibly increased fuel consumption. According to a further aspect of the present invention, however, the maximum error margin is chosen to be equal to three times the standard deviation of the particular parameter, as illustrated in Fig. 3 where the probability $P(v_1)$ of the velocity having the value $v_1$ is shown. So in equation (I) the following parameters can be used:

$s_{t0} \rightarrow do - 3.\sigma_d$, where $\sigma_d$ is the standard variation of the distance;
$v_{t0} \rightarrow v_{t0} - \sigma_v$, where $\sigma_v$ is the standard variation of the velocity; and
$a_{t0} \rightarrow a_{t0} - \sigma_a$, where $\sigma_a$ is the standard variation of the acceleration.

Using these parameters, equation (I) now describes the position of the second vehicle 2 in case of an emergency braking situation while taking the sensor data errors into account. As a result, the calculated position of the second vehicle will be closer to the first vehicle than without these substitutions, thus reducing the safe distance.

In order to determine the actual safe distance, the behaviour of the first vehicle (1 in Fig. 1) has to be taken into account. In the present invention a model is used which involves both the behaviour of the first vehicle itself and the behaviour of the speed control unit, including a communication delay. It is preferred that this combined behaviour is modelled in the Laplace domain, thus using a well-known engineering technique. It has been found that a suitable Laplace domain transfer function representing a realistic model is given by:

$$Z(s) = \exp(-\theta s)/(hs + 1) \qquad\qquad (II),$$

where $\theta$ is a time delay, h is a headway time [?] and s the Laplace domain variable. Transformed to the time domain, this model can be expressed as:

$$Z(t) = (1/h).\exp(-(t-\theta)/h) \qquad\qquad (III)$$

The position $s_1$ of the first vehicle 1 can now be expressed as:

$$s_1(t) = Z(t) * s_2(t) \qquad\qquad (IV)$$

where "*" denotes the convolution operation. This expression is valid for $t \leq T_1$, where $T_1$ is the point in time at which the first vehicle 1 comes to a standstill. Similarly, $T_2$ is the point in time at which the second vehicle 2 comes to a standstill.

The initial distance between the first vehicle 1 and the second vehicle 2 at standstill is equal to:

$$d_0 = s_{t0} - L_2 \qquad (V)$$

where $L_2$ is the length of the second vehicle 2 (see Fig. 1) and $s_{t0}$ is the location of the second vehicle at to, as above.

The safe distance $d_{safe}$ between the vehicles is finally given by:

$$d_{safe} = s_2(T_2) - s_1(T_1) - L_2 \qquad (VI)$$

where $T_1$ and $T_2$ are the times at which the first vehicle and the second vehicle respectively reach standstill, and where $L_2$ again is the length of the second vehicle (as its position is measured from its front).

Using the present invention, the safe distance $d_{safe}$ can be determined repeatedly, for example at least once every second, to check whether the actual distance between the vehicles is still at least as large as the safe distance. As will be clear from the explanation above, the safe distance is time-dependent and further depends on several parameters, such as the actual speed of the vehicles.

In summary, in accordance with the present invention, the speed control unit 101 is configured for:

- determining, using the sensor data and a time-dependent description of the normal state of the second vehicle 2, a state of the second vehicle which results from a maximum deceleration of the second vehicle,
- determining, using a time-dependent model of the behaviour of the first vehicle 1 and the normal state of the second vehicle, a state of the first vehicle which results from said maximum deceleration of said second vehicle, and
- determining, using the maximum deceleration state of the second vehicle and the maximum deceleration state of the first vehicle, the safe distance,

while using error margins of the sensor data to determine the safe distance.

A spacing policy is designed to reach and/or maintain a certain reference value, such as a desired distance. Such a desired distance $d_{desired}$ relative to a preceding vehicle (the second vehicle 2 in Fig. 1) may be expressed as:

$$d_{desired} = r + h.v_1 \qquad (VII)$$

where r is the distance between the vehicles at standstill, h is the desired headway time determined by the spacing policy (which prescribes a suitable spacing between vehicles) and $v_1$ is the speed of the vehicle in question (the first vehicle 1 in Fig. 1). It is noted that do = r + h.$v_1$ + n, where n is a noise component.

The safe distance $d_{safe}$ can advantageously be used to determine a safe headway time $h_{safe}$:

$$h_{safe} = (d_{safe} - r)/v_1 \qquad (VIII)$$

The present invention is based upon the insight that input data produced by sensors, such as speed data and acceleration data, necessarily contain measurement errors. By taking these measurement errors into account, a much more reliable safe vehicle distance (and hence a safe headway time) can be determined. The present invention benefits from the further insight that an error margin of three times the standard deviation gives a very reliable estimate of the error, and hence of the safe distance.

It is noted that any terms used in this document should not be construed so as to limit the scope of the present invention. In particular, the words "comprise(s)" and "comprising" are not meant to exclude any elements not specifically stated. Single elements may be substituted with multiple elements or with their equivalents. Although the invention has been described with reference to on-board vehicle control systems, the invention is not so limited and may also be applied in remote vehicle control system. As stated before, the term vehicles is not limited to road vehicles such as cars and trucks but also includes ships, rail vehicles, airplanes, helicopters and other means of transportation. The term acceleration is not limited to positive acceleration but may also refer to negative acceleration, that is, deceleration. The terms speed and velocity are interchangeable. Similarly, in most cases the terms location and position are interchangeable.

It will therefore be understood by those skilled in the art that the present invention is not limited to the embodiments illustrated above and that many modifications and additions may be made without departing from the scope of the invention as defined in the appending claims.

**Claims**

1.  A method of determining a safe distance ($d_{safe}$) between a first vehicle (1) and a second vehicle (2) moving ahead of the first vehicle, each vehicle having a state which comprises at least one of a position ($s_1$, $s_2$), a speed ($v_1$, $v_2$) and an acceleration ($a_1$, $a_2$), the method comprising the steps of:

    - collecting sensor data relating to the states of the vehicles (1, 2),
    - determining, using the sensor data and a time-dependent description of the state of the second vehicle (2), a state of the second vehicle (2) which results from a maximum deceleration of said second vehicle,
    - determining, using a time-dependent model of the behaviour of the first vehicle (1) and said state of the second vehicle (2), a state of the first vehicle (1) which results from said maximum deceleration of said second vehicle (2), and
    - determining, using said state of the second vehicle (2) and said state of the first vehicle (1), the safe distance ($d_{safe}$),
    wherein error margins of said sensor data are used to determine the safe distance.

2.  The method according to claim 1, wherein the error margins are chosen to be equal to at least two times the standard deviation ($\sigma$) of the respective data, preferably three times.

3.  The method according to claim 1 or 2, wherein the error margins are modeled using joint probability density functions.

4.  The method according to claim 1, 2 or 3, wherein the model comprises a convolution product of a transfer function of the first vehicle (1) and the state of the second vehicle (2).

5.  The method according to any of the preceding claims, wherein the sensor data comprise speed data, acceleration data and distance data, the distance data preferably being derived from position data, and wherein the speed data, acceleration data and distance data preferably have a speed data standard deviation ($\sigma_s$), an acceleration data standard deviation ($\sigma_a$) and a distance data standard deviation ($\sigma_d$) respectively.

6.  The method according to any of the preceding claims, wherein the safe distance ($d_{safe}$) is used to determine a safe headway time ($h_{safe}$), which safe headway time is used to adjust a desired headway time ($h_{des}$) if the desired headway time is greater than the safe headway time.

7.  The method according to any of the preceding claims, wherein the safe distance ($d_{safe}$) is determined repeatedly, preferably at least once a second.

8.  The method according to any of the preceding claims, wherein the actual distance between the vehicles (1, 2) is adjusted on the basis of the safe distance ($d_{safe}$) if the safe distance is smaller than the actual distance.

9.  The method according to any of the preceding claims, used in a cooperative adaptive cruise control system.

10. A computer program product for carrying out the method according to any of the preceding claims.

11. A speed control unit (101) for controlling the speed of a first vehicle (1) in dependence of a second vehicle (2) moving ahead of the first vehicle, each vehicle having a state which comprises at least one of a position ($s_1$, $s_2$), a speed and an acceleration,
    the speed control unit (101) being arranged for receiving sensor data relating to the states of the vehicles (1, 2) from a sensor unit (201) mounted in the first vehicle (1),

the speed control unit (101) comprising a memory and a processor for storing and processing said sensor data and a model of the vehicle's behaviour, the speed control unit being arranged for:

- determining, using the sensor data and a time-dependent description of the state of the second vehicle (2), a state of the second vehicle (2) which results from a maximum deceleration of said second vehicle,
- determining, using a time-dependent model of the behaviour of the first vehicle (1) and said state of the second vehicle (2), a state of the first vehicle (1) which results from said maximum deceleration of said second vehicle (2), and
- determining, using said state of the second vehicle (2) and said state of the first vehicle (1), the safe distance ($d_{safe}$),

wherein error margins of said sensor data are used to determine the safe distance.

12. The speed control unit according to claim 11, wherein the error margins are chosen to be equal to at least two times the standard deviation ($\sigma$) of the respective data, preferably three times.

13. The method according to claim 11 or 12, wherein the error margins are modeled using joint probability density functions.

14. The speed control unit according to claim 11, 12 or 13, which speed control unit is an adaptive speed control unit, preferably suitable for use in a cooperative adaptive cruise control system.

15. A system for vehicle control, comprising a speed control unit (101) according to any of claims 11-14.

**FIG. 1**

**FIG. 2**

**FIG. 3**

**FIG. 4**

Europäisches
Patentamt
European
Patent Office
Office européen
des brevets

# EUROPEAN SEARCH REPORT

Application Number

EP 12 19 2083

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 268 692 A (GROSCH THEODORE O [US] ET AL) 7 December 1993 (1993-12-07) * the whole document * | 1,11 | INV. G01S13/93 G08G1/16 |
| A | US 5 818 355 A (SHIRAI NORIAKI [JP] ET AL) 6 October 1998 (1998-10-06) * the whole document * | 1,11 | |

TECHNICAL FIELDS SEARCHED (IPC)

G01S
G08G

The present search report has been drawn up for all claims

| Place of search | Date of completion of the search | Examiner |
|---|---|---|
| Munich | 9 April 2013 | López de Valle, J |

EPO FORM 1503 03.82 (P04C01)

**EP 2 730 945 A1**

**ANNEX TO THE EUROPEAN SEARCH REPORT
ON EUROPEAN PATENT APPLICATION NO.**

EP 12 19 2083

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2013

| Patent document cited in search report | | Publication date | Patent family member(s) | | Publication date |
|---|---|---|---|---|---|
| US 5268692 | A | 07-12-1993 | NONE | | |
| US 5818355 | A | 06-10-1998 | DE | 19654538 A1 | 03-07-1997 |
| | | | JP | 3487054 B2 | 13-01-2004 |
| | | | JP | H09175295 A | 08-07-1997 |
| | | | US | 5818355 A | 06-10-1998 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. LINDGREN ; F. CHEN.** State of the art analysis: An overview of advanced driver assistance systems (ADAS) and possible human factors issues. *Human Factors and Economic Aspects on Safety,* 2006, 38